# EUROPEAN PATENT SPECIFICATION

(11) **EP 3 106 776 B1**
(45) Date of publication and mention of the grant of the patent: **14.11.2018**
(21) Application number: 16173807.5
(22) Date of filing: 09.06.2016
(51) Int. Cl.: F24S 10/50, F24S 80/54, F24S 80/30, F24S 80/60, H02S 40/44

(54) **SOLAR THERMAL PANEL WITH DIRECT VENTILATION**
THERMISCHES SOLARPANEEL MIT DIREKTER BELÜFTUNG
PANNEAU SOLAIRE THERMIQUE À VENTILATION DIRECTE

(30) Priority: 12.06.2015 IT IT20152312 U
(43) Date of publication of application: 21.12.2016
(73) Proprietor: LU.CE. S.r.l., 60035 Jesi (AN) (IT)
(72) Inventor: SULJEJMAN, ALJI, 60024 FILOTTRANO (AN) (IT)
(74) Representative: Cutropia, Gianluigi

(56) References cited:
- DE-A1- 10 161 085
- US-A- 4 127 102
- US-A- 4 161 170
- US-A- 4 161 809
- US-A- 4 282 856
- US-A- 4 409 965
- US-A- 5 596 981
- US-A1- 2008 178 868
- US-A1- 2011 247 282
- DATABASE WPI Section Ch, Week 201171 Thomson Scientific, London, GB; Class A88, AN 2011-N35102 XP002763932, -& CN 102 192 601 A (ZHANG) 21 September 2011 (2011-09-21)

## Description

The object of the present invention is a solar thermal panel with direct ventilation that considerably improves the output of solar thermal panels that are currently available on the market because of the presence of an airtight chamber filled with gas disposed above the collector and because of the special configuration of the collector forming the duct for air circulation.

A solar thermal panel, also defined as solar collector, is a device intended to convert solar radiation into thermal energy and transfer it to a thermal accumulator for a future use, for example, in the form of hot water, heating, etc.

A solar thermal system is normally composed of a panel that receives solar energy and converts it into thermal energy, and of a heat exchanger with a circulation of fluid used to transfer the thermal energy to a tank used to store the accumulated thermal energy. Normally, it can have two types of circulation, either a natural or a forced circulation of a heat-carrying fluid.

The heat-carrying fluid passes through a serpentine or a grid of parallel tubes suitably welded on the collector, from which it takes the heat captured from the sun. This type of panels has a high output in summer time, whereas the output is dramatically reduced in winter time, because the poor solar radiation takes a very long time only to heat the fluid. In solar thermal panels with heat-carrying fluid there are some areas with a lower temperature, in proximity to the tubes, and intermediate areas with a higher temperature between two tubes. In order to increase the thermal conductivity of the intermediate areas towards the areas where the tube is welded, it is necessary to make high-quality welding and use a copper sheet with suitable thickness as capturing plate. The higher the thickness of the copper sheet is, the higher the thermal conductivity will be, the lower the width of the wave-shaped temperature curve will be and the higher the output of the panel will be. This happens because the output of solar thermal panels is strongly related to the temperature of the capturing plate.

During the periods of the year with a strong solar radiation, a solar system can capture a higher amount of energy compared to the amount that is actually transferred by the heat-carrying fluid to the heat exchanger; i.e. there is an excess of heat between the produced heat and the heat that is actually used by the users. This is the case in which the so-called "stagnation" occurs. Such a phenomenon can occur in some special conditions, such as:
- a circulator failure, with lack of circulation of the heat-carrying fluid;
- no use of solar energy because the preset temperature is reached;
- reduced presence of fluid inside the solar panel circuit; and
- no service because of holidays and inactivity of the installation.

In lack of circulation, the fluid will reach very high temperatures and such a phenomenon will last until the heat of the panel is higher than the heat needed by the users. Such a phenomenon is defined as "stagnation" because the temperature does not rise beyond a certain limit; the temperature can exceed 180°C.

Moreover, solar thermal panels with heat-carrying fluid are not very convenient because of the cost of materials and of the technology used. Furthermore, in case of panels with natural circulation, the panel must reach a set temperature in order for natural circulation to occur.

In spite of the low reradiation at low temperatures, solar panels with selective circulation have considerable re-radiation values when the collector temperature increases. The reradiation is the dispersion caused by the heat emission of the absorbing plate; a strong reradiation increases the temperature of the collector glass, thus also increasing the dispersion by convection at low temperatures.

Another type of solar panel is the solar thermal panel with direct ventilation and air circulation, wherein the heat-carrying fluid consists in air that is heated and then introduced in the space to be heated. This type of panels has enjoyed so far a poor diffusion mainly because of the very low thermal capacity of the air.

However, solar thermal panels with direct ventilation have some advantages that can be summarized as: low operating temperature; immediate readiness and direct use of the heated air.

A solar panel with direct ventilation only needs a few minutes of sunlight to start transporting the hot air in the space to be heated; such a characteristic is due to the fact that the air has a low thermal capacity and is therefore heated very rapidly. Such a characteristic makes the air solar panel especially suitable to be used to heat a space.

Nevertheless, the solar thermal panels with direct ventilation according to the prior art have a low output at low temperatures. Additionally, they are not electrically autonomous because they need to be connected to an electrical power supply capable of electrically powering an air circulation system.

US4161170 **discloses a solar energy collector comprising a heat insulative base and a black-coated absorber plate placed above the heat insulative base in order to define a channel for gas flow. Two transparent protective covers overlay the absorber plate. A space between said two transparent protective covers is filled with an asymmetric gas.**

The object of the present invention is to provide a solar thermal panel with direct air ventilation that guarantees a considerably higher output than traditional air thermal panels because of its special geometrical configuration.

Another object of the present invention is to provide such a solar panel with direct ventilation that is electrically autonomous.

Another object of the present invention is to provide such a solar panel with direct ventilation that is efficient, effective, reliable and simple to install and maintain.

These purposes are achieved according to the invention with the characteristics claimed in independent claim 1.

Advantageous embodiments of the invention appear from the dependent claims.

The solar thermal panel according to the present invention is externally configured as an ordinary solar thermal panel; internally, the solar panel is provided with a collector with air circulation, formed of two suitably - dimensioned planar elements disposed at a close distance one from the other.

Air is introduced in the collector through an inlet duct, wherein air enters at ambient temperature and wherefrom hot air comes out from an outlet duct.

Between the external side of the upper planar element that forms the collector and the external protection glass of the solar thermal panel, a sealed chamber is provided, wherein a greenhouse gas, for example carbon dioxide CO₂ is introduced, said greenhouse gas being suitable for reflecting the infrared radiation of the collector, reducing the heating of the glass.

The panel of the present invention considerably reduces the problem encountered in the solar thermal panels that are available on the market, wherein the glass surface of the solar panel behaves as a transparent surface to solar radiation; the percentage of solar radiation passing through the glass surface is absorbed by the collector, increasing the temperature of the collector; consequently, the collector acquires a heat emission power that can no longer come out from the glass surfaces because the temperature of the collector is lower than the temperature of the sun; therefore, the percentage of energy that is trapped between the glass and the collector does not come from the solar radiation, but from the collector itself, thus partially wasting the heat of the collector to heat the glass.

CO2 is introduced in the sealed chamber provided between the external glass and the upper element of the collector, said CO2 being transparent to solar radiation, just like glass, and absorbing and reflecting infrared radiation; in this way, the heat of the collector is reflected on the collector itself, thus increasing the output of the panel.

In addition, the panel of the invention can be made on site, by coupling the two plates that form the collector with the glass that forms the airtight chamber wherein greenhouse gas is introduced. Instead, the production of panels with shell and tube of the prior art requires welding processes that are impossible to carry out on site because they are made with complex machines installed in a production line.

The invention is hereinafter described in an illustrative embodiment, which has no limiting value, with reference to the attached drawings, wherein:
Fig. 1 is an exploded perspective view of a solar thermal panel.
Fig. 2 is a perspective view of the assembled panel of Fig. 1;
Fig. 3 is a diagrammatic sectional view of the panel of Fig. 2;
Fig. 4 is the same view as Fig. 3, except for it shows a different form of the collector upper element;
Fig. 5 is a perspective view sectioned along the plane V-V of Fig. 2;
Fig. 5A is an enlarged view of the detail contained in circle A of Fig. 5;
Fig. 6 is a perspective view sectioned along the plane VI-VI of Fig. 2;
Fig. 7 is an exploded perspective view of a solar thermal panel according to the invention with a different assembly of the array of photovoltaic cells;
Fig. 8 is a perspective view of the photovoltaic cell of Fig. 7 assembled in the input box;
Fig. 9 is a diagrammatic view of a section of a panel with an airtight chamber filled with air, wherein the X axis indicates the measured temperatures; and
Fig. 10 is the same view as Fig. 9, wherein the airtight chamber is filled with a greenhouse gas.

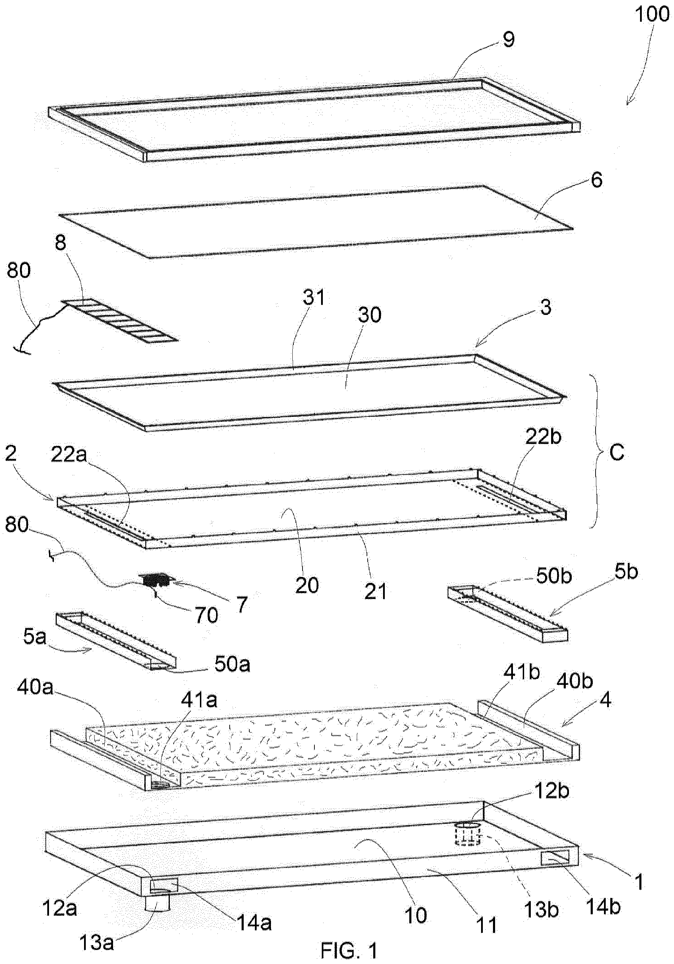

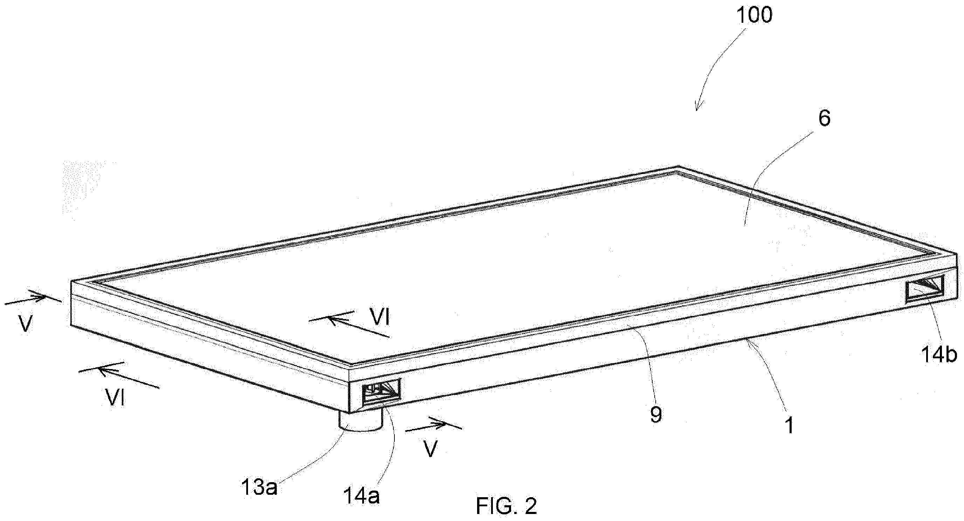

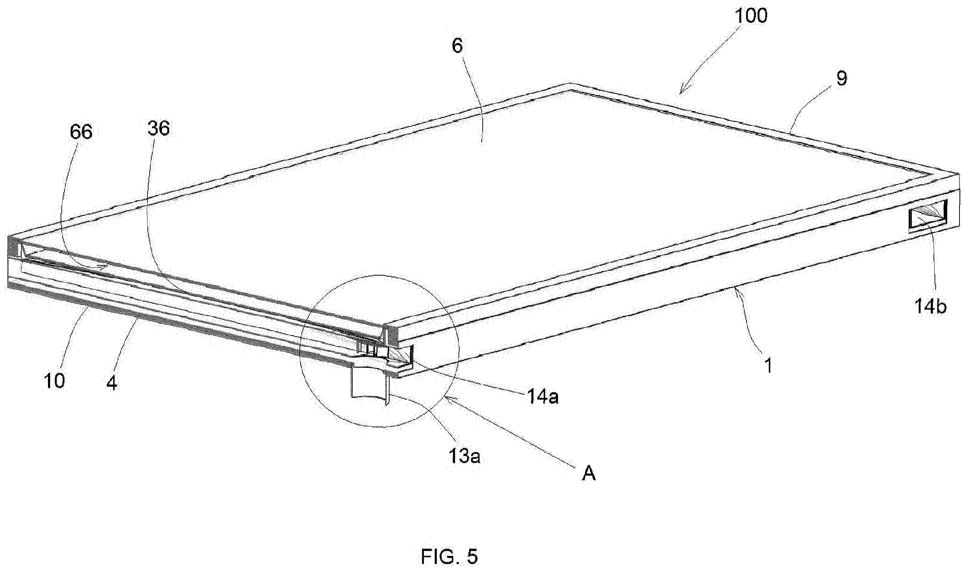

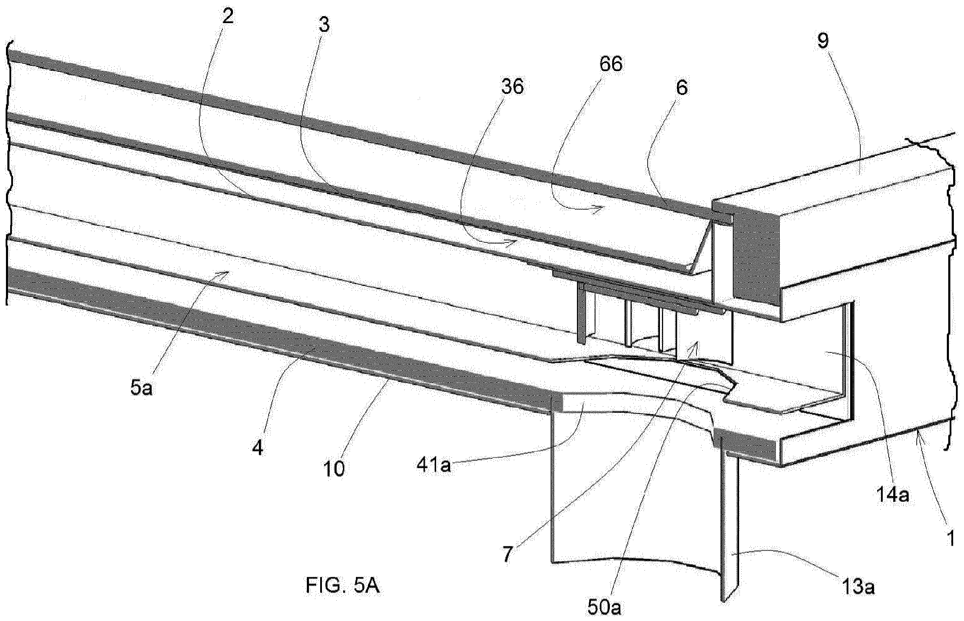

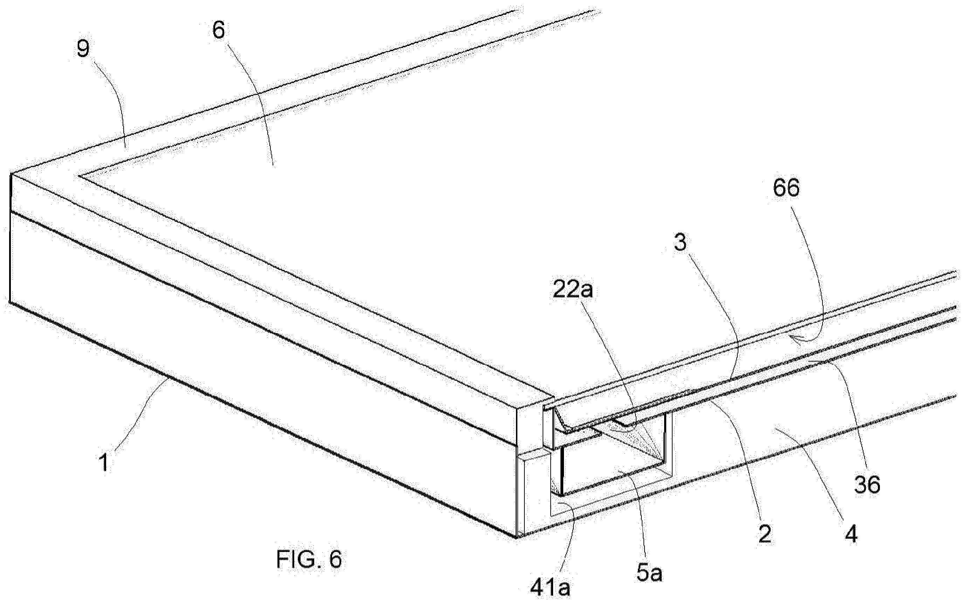

With reference to the aforementioned figures, the solar thermal panel with direct ventilation of the invention is described, being generally indicated with reference numeral (100). In the following description the terms: upper, lower, front, and back refer to the horizontal position of the panel shown in Figs. 1 - 8, it being understood that the panel can be also placed in vertical or oblique position.

Now referring to Figs. 1, 2, 3, 5, 5a and 6, the panel (100) comprises:
- a shaped bottom frame (1) used to protect and contain some of the panel parts;
- a collector (C) with a chamber (36) wherein air circulates and is heated;
- a protection glass (6) disposed at a suitable distance from the collector (C) and sealed to the collector (C) in such manner to form an airtight chamber (66) filled with greenhouse gas.

The bottom frame (1) comprises a metal plate (10) with substantially rectangular shape and a perimeter frame (11) that rises orthogonally from the plate (10) in such manner to form a box intended to contain the various parts of the panel (100).

Two holes (12a, 12b) are obtained in the plate (10) of the bottom frame, in proximity to two opposite corners of the plate (10). An inlet duct (13a) and an outlet duct (13b) are disposed on the plate (10) of the bottom frame, in correspondence of the holes (12a, 12b) in such manner to protrude towards the outside of the plate (10).

The perimeter frame (11) of the bottom frame has a front wall with two lateral ends. One inlet opening (14a) and one outlet opening (14b) with substantially rectangular shape are obtained in proximity to the lateral ends of the front wall of the perimeter frame (11). In view of the above, if the panel is placed in vertical position, the panel (100) has one air inlet and one air outlet in rear position (the inlet and outlet ducts (13a, 13b)) and one air inlet and one air outlet in lower position (the inlet and outlet openings (14a, 14b)). Therefore, the inlet and outlet ducts (13a, 13b) or the inlet and outlet openings (14a; 14b) can be enabled according to the installation requirements.

The inlet and outlet openings (14a; 14b) are used when two panels (100) are disposed in mutual communication, side by side, with the inlet and outlet openings in communication.

The inlet and outlet ducts (13a, 13b) are used when the panel (100) is installed on a wall of the building. In such a case, two holes are drilled on the wall and a flexible tube, which is suitable for air circulation, is installed in the holes of the wall and coupled with the inlet and outlet ducts (13a, 13b). A sound-insulating air filter is disposed in the flexible tube.

Instead, when the panel (100) is installed on the roof of a building, a system of tubes is provided to convey the hot air of multiple panels towards the inside of the building to be heated. An electronic controller diverts the hot air in the space where it is needed. Additional tubes are provided to convey the air from the internal space to the panels.

According to the type of installation, the holes of the bottom frame (1) that are not used are closed.

The collector (C) comprises a lower element (2) and an upper element (3) disposed at a suitable distance from the lower element (2), joined and sealed to said lower element (2) in such manner to form the chamber (36) of the collector wherein air flows.

The lower element (2) and the upper element (3) of the collector are metal sheets coupled at a preset mutual distance, for example 8 - 12mm, in such manner to form the chamber (36) of the collector wherein air flows.

The inlet duct (13a) and the inlet opening (14a) are in communication with the chamber (36) of the collector at one end of the collector. The outlet duct (13b) and the outlet opening (14b) are in communication with the chamber (36) of the collector at the opposite end of the collector. In this way, the air to be heated enters the chamber of the collector from the inlet duct or inlet opening, is heated in the collector and the hot air comes out of the collector through the outlet duct or outlet opening.

The lower element (2) of the collector comprises a plate (20) and a perimeter frame (21) that raises orthogonally from the plate (20). An inlet slot (22a) used to introduce air in the chamber of the collector and an outlet slot (22b) used to eject air from the chamber of the collector are respectively obtained in proximity to the ends of the plate.

The inlet and outlet slots (22a, 22b) are narrow and elongated to convert the air flow in a lamellar flow and distribute the lamellar air flow uniformly in order to better reach the upper element (3) of the collector. Otherwise, the air would only pass in one section of the collector, thus negatively affecting the operation of the panel (100).

The upper element (3) of the collector comprises a plate (30) and a perimeter frame (31) that raises from the plate, in oblique direction, with an angle of approximately 40°-90° with respect to the plane of the plate, in order not to hinder the thermal expansion of the metal plates that form the lower and upper elements of the collector. The plate (30) and the perimeter frame (31) are obtained from the same metal sheet with lateral bends. Alternatively, the perimeter frame (31) can be obtained by assembling multiple separate parts on the plate (30).

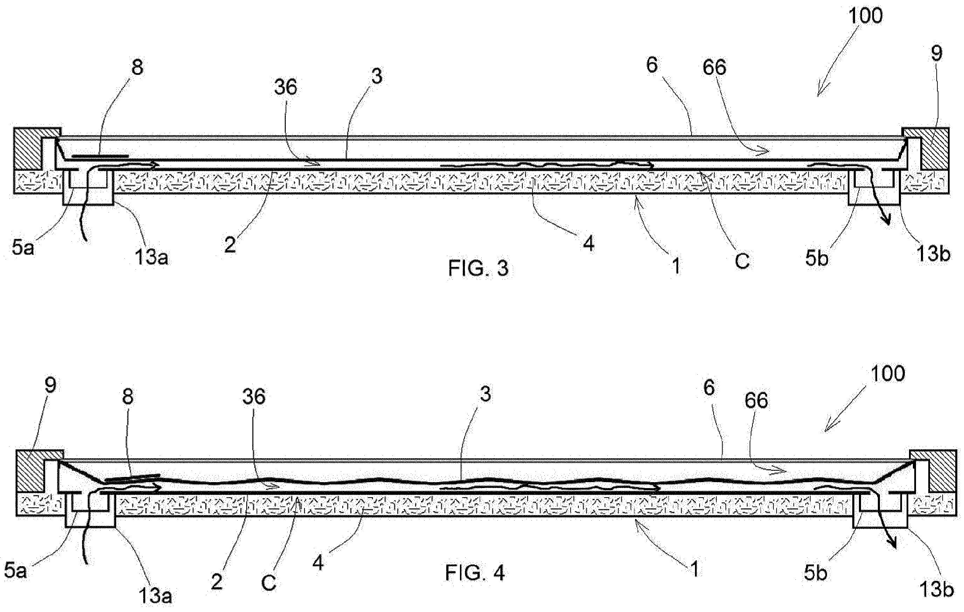

Fig. 4 shows a different form of the upper element (3), wherein the plate (30) is not planar, but shaped and bent as a triangular wave in cross section, in such manner to give a wavy motion to the air flow that circulates in the chamber (36) of the collector. Moreover, the bending of the plate (30) of the upper element reinforces the upper element and eliminates the thermal expansion effects on the collector. The above implies a higher turbulence of the air flow and therefore a better cooling of the upper element (3) of the collector by means of heat exchange.

The solar thermal panel (100) comprises an insulating panel (4) disposed between the bottom frame (1) and the lower element (2) of the collector. The insulating panel (4) is made of an insulating material, such rock wool, glass wool, expanded polyurethane and the like. The insulating panel (4) has a thickness of about 5 cm.

Two lateral housings (40a, 40b) are obtained in the insulating panel (4), respectively in communication with the inlet opening (14a) and the outlet opening (14b) of the bottom frame (1). One inlet hole (41a) and one outlet hole (41b) are respectively obtained in the lateral housings (40a, 40b) of the insulating panel. The inlet and outlet holes (41a, 41b) of the insulating panel are disposed in register with the inlet and outlet holes (12a, 12b) of the bottom frame (1).

An inlet box (5a) and an outlet box (5b) are respectively disposed inside the lateral housings (40a, 40b) of the insulating panel.

The inlet box and the outlet box (5a, 5b) are open in the front to communicate with the inlet opening and the outlet opening (14a; 14b) of the bottom frame.

The inlet box and the outlet box (5a, 5b) are respectively provided with inlet and outlet holes (50a, 50b) disposed in register with the inlet and outlet holes (41a, 41b) of the lateral housings of the insulating panel.

The inlet box and the outlet box (5a, 5b) are open on top to communicate with the inlet and outlet slots (22a; 14b) obtained in the lower element of the collector.

A fan (7) is mounted in the inlet box (5a) to extract air from the space towards the inside of the solar thermal panel (100). An electronic unit (70) is optionally provided in the inlet box (5a). The electronic unit (70) may comprise switches, a processor, probes and sensors of different type, such as for instance a thermal probe or the like.

Advantageously, the electronic unit (70) comprises a switch connected to the fan (7) and to a thermostat provided in the space to be heated. In this case, when the desired temperature is reached in the space, the thermostat controls the switch that turns off the fan (7).

The inlet and outlet boxes (5a, 5b) are fixed in airtight condition to the plate (20) of the lower element of the collector in order to avoid air losses.

An array of photovoltaic cells (8) is electrically connected to the fan (7) and to the thermal probe (70) by means of an electrical cable (80) that crosses the inlet box (5a) in airtight condition. In this way all electronic parts, i.e. the fan (7) and the electronic unit (70) are powered by the array of photovoltaic cells (8).

Advantageously, the array of photovoltaic cells (8) is disposed on the upper element (2) of the collector inside the airtight chamber (66). In this way, the array of photovoltaic cells (8) is protected by the glass plate (6) while still receiving the sunlight.

A closing frame (9) is fixed to the bottom frame (1) in such manner to close the glass plate (6) on the perimeter. Therefore, the insulating panel (4), the collector (C) and the glass plate (6) are closed in sandwich configuration between the bottom frame (1) and the closing frame (9).

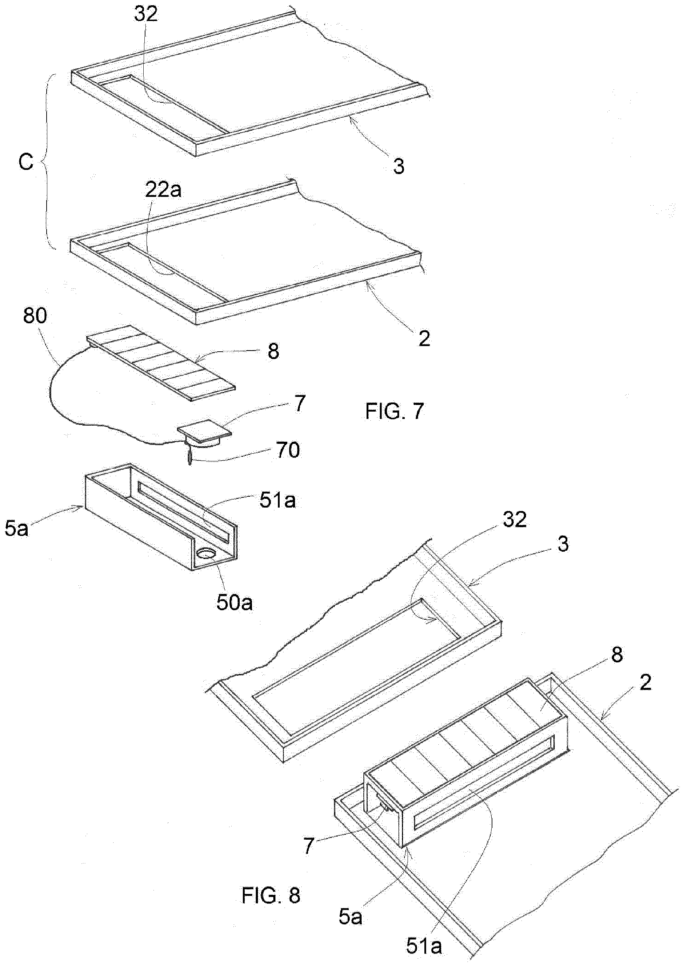

Fig. 7 and Fig. 8 show a solar thermal panel (100) according to the invention, wherein the array of photovoltaic cells (8) is mounted in the inlet box (5a).

In this case, the inlet slot (22a) of the lower element of the collector is larger in order to allow for passing the inlet box (5a). The inlet box (5a) has a slot (51) in communication with the chamber (36) of the collector.

In such a case, the upper element (3) of the collector has a window (32) in correspondence of the array of photovoltaic cells (8) disposed in the inlet box (5a) to let the light reach the array of photovoltaic cells (8).

The advantage of such a different embodiment is that the cold air extracted by the fan (7) in the inlet box (5a) hits the array of photovoltaic cells (8) in the back, cools it down, increases the output of the array of photovoltaic cells (8) and uses the heat of the array of photovoltaic cells to heat the air that enters in the collector (C).

Moreover, all electronic parts (array of photovoltaic cells (8), fan (7) and electronic unit (70)) are provided in a single block that can be easily recessed into the panel (100) and extracted for maintenance purposes. This system allows for easy action when maintenance is needed.

As it is known, the radiation that hits a surface can be reflected or absorbed either partially or totally. The absorbed radiation is re-irradiated (emitted) with a frequency (depending on the material and on the temperature of the absorbing surface) that is different from the absorbed radiation; instead, in case of reflection, the frequency of the reflected radiation remains unchanged.

A selective coating is applied on the upper surface of the upper element (3) of the collector, said selective coating being very absorbing in the solar spectrum, but having a low re-emissivity (re-irradiation) coefficient (ε = 0.03 - 0.12) in the infrared spectrum to reduce the losses caused by radiation.

The selective coating can be a selective paint, which is a special paint with a very high luminous absorption coefficient and a very low re-irradiation coefficient. For this reason the selective paint absorbs the solar rays, without reflecting them. In brief, the selective paint is a filter that lets the solar radiation, but not the low-frequency infrared rays, pass.

The selective coating can also be a galvanic treatment with heavy metal oxides.

Said selective coatings considerably improve the panel output at low temperatures. Nevertheless, the selective characteristics gradually decrease upon increasing the temperature of the collector (C) whereon the selective coating is applied. At saturation temperature (or stagnation temperature of about 200 °C recorded with an ambient temperature of 30°C) said selective coatings behave as an ordinary paint. In such a case, all the solar energy captured by the collector (C) is re-radiated from the collector and absorbed by the glass plate (6). Glass is a good thermal conductor and rapidly dissipates the energy received from the collector (C), decreasing the thermal efficiency of the panel.

The glass plate (6) used to protect the collector (C) is disposed at a suitable distance, for example 20 - 30 mm, from the upper element (3) of the collector. The glass plate (6) is joined to the upper element (3) of the collector in airtight condition, in order to form the airtight chamber (66) that is filled with greenhouse gas, for example carbon dioxide CO₂. The airtight chamber (66) is transparent to solar radiation, but absorbs and reflects the infrared radiation, so that the heat of the collector (C) is reflected on the collector itself, increasing the output of the panel (100).

The glass plate (6) is preferably made of an extralight tempered glass with thickness of about 4 mm

An innovative characteristic of the solar thermal panel (100) is represented by the fact that its efficiency is additionally improved with the introduction of a greenhouse gas, i.e. a gas that reflects the infrared radiation, acting as a filter, in the airtight chamber (66). Unlike the selective coating that loses its infrared filtering characteristics when the temperature increases, the greenhouse gas has a very low thermal conductivity, therefore it is heated by the collector (C) in a much lower extent, maintaining its infrared filtering characteristics. In other words, the greenhouse gas increases the stagnation temperature that represents an indicator of higher output in extreme conditions. Moreover, such a greenhouse gas also solves the problem of condensation on the glass plate (6).

Two comparative tests were carried out to better understand the operation of the greenhouse gas introduced in the airtight chamber. In the first test, air was introduced in the airtight chamber (66). In the second test, a greenhouse gas, such as gas R417, which is a non-azeotropic ternary mixture of chlorofluorocarbons (CFC), like R-125, R-134a and R-600, was introduced in airtight chamber (66).

The components of the R417 gas are shown in the following table.

| Chemical Name | % Weight |
|---|---|
| 1,1,1,2 Tetrafluoroethane (R-134a) | 50 |
| Pentafloruroethane (R1245) | 46.6 |
| Butane | 3.4 |

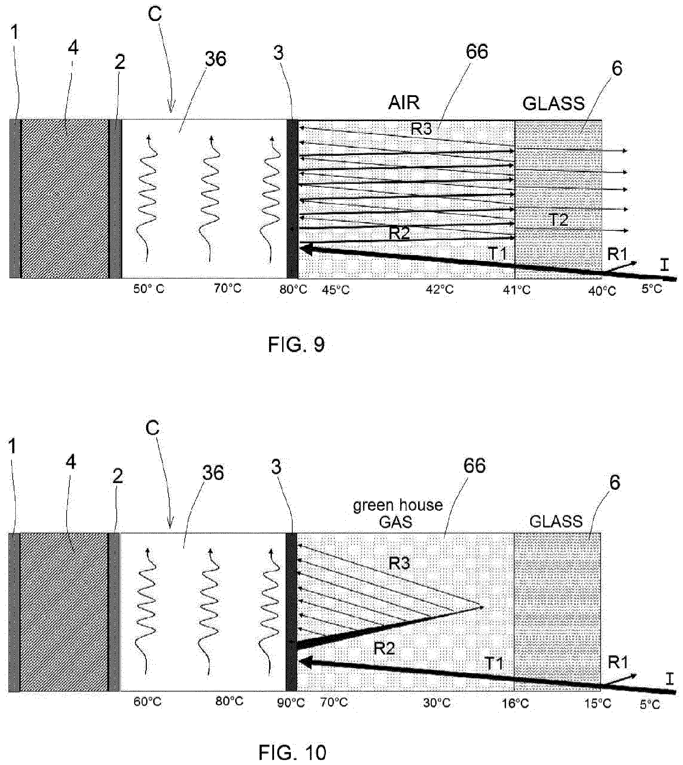

The results of the two tests are respectively shown in Figs. 9 and 10, wherein the X axis indicates the temperature in centigrade measured outside and in various points of the solar thermal panel. The thickness of the arrows (indicatively) represents the radiation power.

With reference to Fig. 9, we start with a solar radiation (I) coming from outside. When the radiation (I) hits the glass plate (6), only a small part of the radiation is reflected (first reflected ray (R1)), while the majority of the radiation is transmitted generating a first transmitted ray (T1) that passes through the glass plate (6) and the airtight chamber (66), hitting the upper element (3) of the collector. Part of the first transmitted ray (T1) is absorbed by the collector (C) that is heated, and part of the first transmitted ray (T1) is re-radiated by the upper element (3) of the collector, generating a second emitted ray (R2) that passes through the airtight chamber (66) and hits the glass plate (6).

A small part of the reflected ray (R2) is reflected by the glass plate, generating a third reflected ray (R3) that returns on the upper element (3) of the collector, whereas the majority of the second emitted ray (R2) is absorbed by the glass plate (6) forming a second transmitted ray (T2) that is emitted outside, considerably impairing the thermal efficiency of the collector. It must be noted that, since the glass plate (6) is opaque to IR radiation, the IR radiation contained in the second emitted ray (R2) is absorbed by the glass plate (6), increasing its temperature. In turn, the glass plate re-radiates half of this radiation towards the collector and the other half towards the external ambient.

If the external temperature is 5°C, by means of experimental temperature measurements, it was found out that the glass plate (6) has a temperature of 40-41°C, the upper element (3) of the collector has a temperature of 80°C, in the airtight chamber (66) there is a temperature gradient of about 42-45°, and in the chamber (36) of the collector there is a temperature gradient of about 50-70°C.

As shown by the experimental data, part of the incident radiation (I) coming from outside is wasted heating the glass plate (6) instead of being used to heat the collector (C).

With reference to Fig. 10, the situation is very different when a greenhouse gas is introduced in the airtight chamber.

In fact, while travelling in the airtight chamber (66), the second emitted ray (R2) that is re-radiated by the upper element (3) of the collector is gradually reflected by the greenhouse gas contained in the airtight chamber, forming a plurality of third reflected rays (R3) that return to the upper element (3) of the collector, which is additionally heated.

In case of a sufficiently large airtight chamber, for example with width larger than 20 mm, and also according to the type of gas, no percentage of the second reflected ray will reach the glass plate (6) and is dispersed outside. In fact, the second emitted ray (R2) is completely reflected gradually by the greenhouse chamber until it is finished. In this way the glass plate (6) is not uselessly heated.

If the external temperature is 5°C, by means of experimental temperature measurements, it was found out that the glass plate (6) has a temperature of 15-16°C, the upper element (3) of the collector has a temperature of 90°C, in the airtight chamber (66) there is a temperature gradient of about 30-70°, and in the chamber (36) of the collector there is a temperature gradient of about 60-80°C.

As shown by the experimental data, the incident radiation (I) coming from outside is used completely, heating the collector (C). In fact, a temperature gradient much higher than the case without greenhouse gas can be obtained in the collector chamber.

Amongst greenhouse gases, chlorofluorocarbons (CFC) and preferably R417 or CFC12, known as R12, can be used in addition to carbon dioxide. It must be considered that a minimum quantity of CFC gas is used and in any case the CFC gas is contained in a sealed space at ambient pressure. Therefore contamination risks are very low.

In one of its possible applications, the panel (100) can be installed on the roof or on the wall of a building, preferably in the part facing towards the South. Being designed for heating and considering that during the winter the sun has a declination of about - 23° from the equinox, the panel (100) is ideal for lateral installation. In this way it acts as insulation during the night and as heating during the day. When the panel (100) is in vertical position, heating in summer time is limited and can be used to heat water with the use of a heat exchanger. Obviously, the hot air produced by the panels can be also used for drying in industrial processes or agriculture.

## Claims

1. Solar thermal panel (1) with direct ventilation comprising:
- a collector (C) provided with a chamber (36) wherein air to be heated flows,
- at least one air input (13a, 14a) in communication with the chamber (36) of the collector to inlet air to be heated in the collector,
- at least one air output (13b, 14b) in communication with the chamber (36) of the collector to eject hot air from the collector, and
- a glass plate (6) disposed onto the collector (C) to protect the collector
wherein
said collector (C) comprises a plate-shaped lower element (2) and a plate-shaped upper element (3) disposed at a suitable distance from the lower element (2) and is hermetically coupled with said lower element (2) in such manner to form said chamber (36) wherein the air passes and is heated; and
said glass plate (6) is disposed above the upper element (3) of the collector at a suitable distance and is hermetically coupled with said upper element (3) of the collector, in such manner to form an airtight chamber (66);
said airtight chamber (66) being filled with greenhouse gas;
**characterized in that**
the panel (100) also comprises:
- a fan (7) disposed in correspondence of said air input (13a, 14a) to extract air from the outside towards the chamber (36) of said collector;
- an array of photovoltaic cells (8) disposed inside said airtight chamber (66) of the panel and electrically connected to said fan (7) in order to power the fan; and
- an input box (5a) in communication with said air input (13a, 14a) of the panel and with said chamber (36) of the collector;
wherein said fan (7) and said array of photovoltaic cells (8) are disposed in said input box (5a) and wherein said upper element (3) of the collector comprises a window (32) in correspondence of said array of photovoltaic cells (8).

2. The panel (100) of claim 1, wherein the upper element (3) is disposed at a distance of approximately 8-12 mm from the lower element (2).

3. The panel (100) of claim 1 or 2, wherein said lower and upper elements (2, 3) of the collector comprise a plate (20, 30) and a perimeter frame (21, 31) that raises from said plate in such manner to compensate the thermal expansion of the collector.

4. The panel (100) of claim 3, wherein said upper element (3) of the collector comprises a plate (30) folded in triangular-wave configuration, in cross-section.

5. The panel (100) of any one of the preceding claims, wherein said greenhouse gas introduced in said airtight chamber (66) comprises carbon dioxide (CO₂) or chlorofluorocarbons (CFC).

6. The panel (100) of any one of the preceding claims, wherein said airtight chamber (66) has a width of 10-20 mm.

7. The panel (100) of any one of the preceding claims, wherein said upper element (3) of the collector comprises a selective coating disposed on its upper surface, said selective coating being very absorbent in the solar spectrum, but with a low emissivity coefficient in the infrared spectrum.

8. The panel (100) of any one of the preceding claims, also comprising an output box (5b) in communication with said air output (13b, 14b);
said air input and output boxes (5a, 5b) being open on top and disposed under said lower element (2) of the collector;
said lower element (2) of the collector comprising narrow and elongated slots (22a, 22b) disposed in proximity to its lateral ends in correspondence of said air input and output boxes (5a, 5b).

9. The panel (100) of any one of the preceding claims, also comprising an insulation panel (4) disposed under said lower element (2) of the collector.

10. The panel (100) of claim 9 when depending on claim 8, wherein said insulation panel (4) comprises two lateral housings (40a, 40b) in communication with said air inlets and outlets (13a, 14a, 13b, 14b);
said air inlet and outlet boxes (5a, 5b) being disposed in said lateral housings (40a, 40b) of the insulation panel.

11. The panel (100) of any one of the preceding claims, also comprising a bottom frame (1) disposed under said lower element (2) of the collector, wherein said air inlets and outlets (13a, 14a, 13b, 14b) are obtained in said bottom frame.

## Patentansprüche

1. Solarthermisches Paneel (1) mit Direktbelüftung, umfassend:
- einen Kollektor (C) mit einer Kammer (36), durch die die zu beheizende Luft strömt,
- wenigstens einen Lufteinlass (13a, 14a), der mit der Kammer (36) des Kollektors in Verbindung steht, um die zu beheizende Luft in den Kollektor einzulassen,
- wenigstens einen Luftauslass (13b, 14b), der mit der Kammer (36) des Kollektors in Verbindung steht, um die beheizte Luft aus dem Kollektor auszulassen, und
- eine Glasplatte (6), die auf dem Kollektor (C) angeordnet ist, um den Kollektor zu schützen,
wobei
der Kollektor (C) ein unteres plattenförmiges Element (2) und ein oberes plattenförmiges Element (3) umfasst, das in einem angemessenen Abstand von dem unteren Element (2) angeordnet und hermetisch dicht mit dem unteren Element (2) verbunden ist, derart, dass die Kammer (36) gebildet wird, durch die die Luft strömt und sich erwärmt; und
die Glasplatte (6) über dem oberen Element (3) des Kollektors in einem angemessenen Abstand angeordnet und hermetisch dicht mit dem oberen Element (3) des Kollektors verbunden ist, derart, dass eine luftdichte Kammer (66) gebildet wird;
die luftdichte Kammer (66) mit Treibhausgas gefüllt wird;
**dadurch gekennzeichnet, dass**
das Paneel (100) weiter Folgendes umfasst:
- ein Gebläse (7), das an dem Lufteinlass (13a, 14a) angeordnet ist, um Luft von außen zur Kammer (36) des Kollektors hin anzusaugen;
- eine Gruppe von Photovoltaikzellen (8), die im Inneren der luftdichten Kammer (66) des Paneels angeordnet und mit dem Gebläse (7) elektrisch verbunden ist, um das Gebläse zu versorgen; und
- ein Einlassgehäuse (5a), das mit dem Lufteinlass (13a, 14a) des Paneels und mit der Kammer (36) des Kollektors in Verbindung steht;
wobei das Gebläse (7) und die Gruppe von Photovoltaikzellen (8) in dem Einlassgehäuse (5a) angeordnet sind und wobei das obere Element (3) des Kollektors ein Fenster (32) an der Gruppe von Photovoltaikzellen (8) umfasst.

2. Paneel (100) nach Anspruch 1, wobei das obere Element (3) in einem Abstand von ungefähr 8 - 12 mm vom unteren Element (2) angeordnet ist.

3. Paneel (100) nach Anspruch 1 oder 2, wobei die unteren und oberen Elemente (2, 3) des Kollektors eine Platte (20, 30) und einen Umfangsrahmen (21, 31) umfassen, der sich von der Platte erhebt, derart, dass die Wärmeausdehnung des Kollektors kompensiert wird.

4. Paneel (100) nach Anspruch 3, wobei das obere Element (3) des Kollektors eine Platte (30) umfasst, die im Querschnitt in einer Dreieckwellenkonfiguration gefaltet ist.

5. Paneel (100) nach einem der vorstehenden Ansprüche, wobei das in die luftdichte Kammer (66) eingeführte Treibhausgas Kohlendioxid (CO₂) oder Fluorkohlenwasserstoffe (CFC) umfasst.

6. Paneel (100) nach einem der vorstehenden Ansprüche, wobei die luftdichte Kammer (66) eine Breite von 10 - 20 mm aufweist.

7. Paneel (100) nach einem der vorstehenden Ansprüche, wobei das obere Element (3) des Kollektors eine selektive Beschichtung umfasst, die auf seiner oberen Oberfläche angeordnet ist, wobei die selektive Beschichtung stark Sonnenstrahlen absorbierend ist, aber einen geringen Infrarot-Emissionskoeffizienten aufweist.

8. Paneel (100) nach einem der vorstehenden Ansprüche, weiter umfassend ein Auslassgehäuse (5b), das mit dem Luftauslass (13b, 14b) in Verbindung steht;
wobei die Lufteinlass- und -auslassgehäuse (5a, 5b) auf der Oberseite offen sind und unter dem unteren Element (2) des Kollektors angeordnet sind;
das untere Element (2) des Kollektors schmale, längliche Schlitze (22a, 22b) umfasst, die nahe seiner seitlichen Endabschnitte an den Lufteinlass- und -auslassgehäusen (5a, 5b) angeordnet sind.

9. Paneel (100) nach einem der vorstehenden Ansprüche, umfassend weiter ein isolierendes Paneel (4), das unter dem unteren Element (2) des Kollektors angeordnet ist.

10. Paneel (100) nach Anspruch 9, sofern abhängig von Anspruch 8,
wobei das isolierende Paneel (4) zwei seitliche Sitze (40a, 40b) umfasst, die mit den Lufteinlässen und -auslässen (13a, 14a, 13b, 14b) in Verbindung stehen;
wobei die Lufteinlass- und -auslassgehäuse (5a, 5b) in den seitlichen Sitzen (40a, 40b) des isolierenden Paneels angeordnet sind.

11. Paneel (100) nach einem der vorstehenden Ansprüche, umfassend weiter einen Bodenrahmen (1), der unter dem unteren Element (2) des Kollektors angeordnet ist, wobei die Lufteinlässe und -auslässe (13a, 14a, 13b, 14b) in dem Bodenrahmen herausgearbeitet sind.

## Revendications

1. Panneau (1) solaire thermique à ventilation directe comprenant :
- un collecteur (C) muni d'une chambre (36) dans lequel entre l'air à réchauffer,
- au moins une entrée d'air (13a, 14a) communicante avec la chambre (36) du collecteur pour y introduire l'air à réchauffer,
- au moins une sortie d'air (13b, 14b) communicante avec la chambre (36) du collecteur pour la sortie de l'air chaud du collecteur, et
- une vitre (6) disposée sur le collecteur (C) pour la protection du collecteur,
où
ledit collecteur (C) comprend un élément inférieur (2) en forme de plaque et un élément supérieur (3) en forme de plaque disposé à une distance opportune de l'élément inférieur (2) et couplé de manière étanche au dit élément inférieur (2), de manière à former ladite chambre (36) dans laquelle l'air passe et se réchauffe ; et
ladite vitre (6) est placée supérieurement à l'élément supérieur (3) du collecteur, à une distance appropriée, et elle est couplée de manière étanche au dit élément supérieur (3) du collecteur, en formant ainsi une chambre étanche (66) ;
ladite chambre étanche (66) étant remplie de gaz à effet de serre :
**caractérisé en ce que**
le panneau (100) comprend
- un ventilateur (7) disposé en correspondance de ladite entrée d'air (13a, 14a) pour aspirer l'air depuis l'extérieur vers la chambre (36) de dit collecteur ;
- un groupe de cellules photovoltaïques (8) disposé dans ladite chambre étanche (66) du panneau et branché électriquement au dit ventilateur (7), pour l'alimenter ; et
- un boitier d'entrée (5a) en communication avec ladite entrée d'air (13a, 14a) du panneau et avec ladite chambre (36) du collecteur ;
où ledit ventilateur (7) et ledit groupe de cellules photovoltaïques (8) sont disposés dans dit boitier d'entrée (5a) et où ledit élément supérieur (3) du collecteur comprend une fenêtre (32) en correspondance du dit groupe de cellules photovoltaïques (8).

2. Panneau (100) selon la revendication 1, où l'élément supérieur (3) est disposé à une distance d'environ 8 - 12mm de l'élément inférieur (2).

3. Panneau (100) selon la revendication 1 ou 2, où lesdits éléments inférieur et supérieur (2, 3) du collecteur comprennent une plaque (20, 30) et un cadre de périmètre (21, 31) qui s'élève de ladite plaque, de manière à compenser la dilatation thermique du collecteur.

4. Panneau (100) selon la revendication 3, où ledit élément supérieur (3) du collecteur comprend une plaque (30) pliée dans une configuration à vague triangulaire, en section transversale.

5. Panneau (100) selon l'une quelconque des revendications précédentes, où ledit gaz à effet de serre introduit dans ladite chambre étanche (66) comprend de l'anhydride carbonique (CO₂) ou des chlorofluorocarbures (CFC).

6. Panneau (100) selon l'une quelconque des revendications précédentes, où ladite chambre étanche (66) a une grandeur de 10 - 20 mm.

7. Panneau (100) selon l'une quelconque des revendications précédentes, où ledit élément supérieur (3) du collecteur comprend un revêtement sélectif disposé sur la surface supérieure, ledit revêtement sélectif étant très absorbant dans le spectre solaire, mais avec un faible coefficient d'émission dans le spectre infra-rouge.

8. Panneau (100) selon l'une quelconque des revendications précédentes, comprenant également un boitier d'entrée (5b) communicant avec ladite sortie d'air (13b, 14b) ;
lesdits boitiers d'entrée et de sortie d'air (5a, 5b) étant ouverts supérieurement et disposés sous le dit élément inférieur (2) du collecteur ;
ledit élément inférieur (2) du collecteur comprenant des fissures étroites et allongées (22a, 22b) disposées près de ses extrémités latérales, en correspondance des dits boitiers d'entrée et de sortie d'air (5a, 5b).

9. Panneau (100) selon l'une quelconque des revendications précédentes, comprenant également un panneau isolant (4) disposé sous ledit élément inférieur (2) du collecteur.

10. Panneau (100) selon la revendication 9 lorsque dépendante de la revendication 8, où ledit panneau isolant (4) comprend deux sièges latéraux (40a, 40b) communicants avec lesdites entrées et sorties d'air (13a, 14a, 13b, 14b);
lesdits boitiers d'entrée et de sortie d'air (5a, 5b) étant disposés dans lesdits sièges latéraux (40a, 40b) du panneau isolant.

11. Panneau (100) selon l'une quelconque des revendications précédentes, comprenant également un châssis de fond (1) disposé sous ledit élément inférieur (2) du collecteur, où lesdites entrées et sorties d'air (13a, 14a, 13b, 14b) sont réalisées dans dit châssis de fond.
